# EUROPEAN PATENT APPLICATION

(11) **EP 1 826 190 A2**
(43) Date of publication of application: **29.08.2007**
(21) Application number: 07102950.8
(22) Date of filing: 23.02.2007
(51) Int. Cl.: C04B 35/46, H01G 4/12, H01G 4/30

(54) **Dielectric ceramic composition and the production method**

(30) Priority: 24.02.2006 JP 2006049017
(71) Applicant: TDK Corporation, Tokyo 103-8272 (JP)
(72) Inventor: Watanabe, Yasuo, Tokyo Tokyo 103-8272 (JP)
(74) Representative: Vossius & Partner

(57) **Abstract**

A dielectric ceramic composition, comprising a main component including a dielectric oxide, and a sintering auxiliary comprising a first component including an oxide of Li and a second component including an oxide of M1 (note that M1 is at least one kind of element selected from group V elements and VI group elements): wherein said dielectric ceramic composition comprises a plurality of dielectric particles and crystal grain boundaries existing between said dielectric particles next to each other; concentration of M1 element becomes lower from a particle surface to inside thereof in the plurality of dielectric particles; and when assuming that a particle diameter of said dielectric particles is D and a content ratio of the M1 element at said crystal grain boundaries is 100%, a content ratio of the M1 element at a depth T₅₀, where a depth from the particle surface is 50% of said particle diameter D, is 3 to 55%.

## Description

The present invention relates to a dielectric ceramic composition used as a dielectric layer of an electronic device, such as a multilayer ceramic capacitor, and a production method thereof.

A dielectric ceramic composition of the related art for composing a multilayer ceramic capacitor as an example of electronic devices comprises a main component including barium titanate (BaTiO₃) as ferroelectrics, strontium titanate (SrTiO₃) as paraelectrics, calcium titanate (CaTiO₃), strontium calcium zirconate (CaSrZrO₃), calcium zirconate (CaZrO₃), strontium zirconate (SrZrO₃), titanic oxide (TiO₂), neodymium titanate (NdTiO₃) and other variety of dielectric oxides.

This kind of dielectric ceramic composition is hard to be sintered as it is, so that it has been fired at a higher temperature than 1300°C after being added with a variety of sintering auxiliaries. Also, since this kind of dielectric ceramic composition has a property of being reduced to become a semiconductor when fired in a neutral atmosphere or reducing atmosphere having a low oxygen partial pressure, it has to be fired in an oxidizing atmosphere with a high oxygen partial pressure when producing a multilayer ceramic capacitor by using the dielectric ceramic composition.

Accordingly, as an internal electrode material to be fired at the same time with a dielectric ceramic composition, it has been necessary to use precious metals (for example, palladium and platinum, etc.) with properties of having a high melting point of not melting at a temperature that the dielectric ceramic composition is sintered and not oxidized even when fired in an oxidizing atmosphere, etc.

However, precious metals are generally expensive, so that attaining of a low cost in a multilayer ceramic capacitor has been hindered.

Furthermore, a high firing temperature leads to the disadvantages below. A firing furnace itself is expensive, damages on the firing furnace to be used is large, maintenance and management costs of the firing furnace gradually increase over time of using, and energy costs required by vitrification become enormous. Also, a stress is easily built up due to a difference of thermal expansion coefficients between a dielectric ceramic composition and an internal electrode material, which may cause disadvantages of arising of cracks and a decline of specific permittivity, etc.

Accordingly, there are demands for developing a dielectric ceramic composition able to be fired at a low temperature and not becoming a semiconductor even when using inexpensive base metals (for example, nickel and copper, etc.) as an internal electrode material and being fired in a neutral atmosphere or a reducing atmosphere, that is, having excellent reduction resistance, exhibiting sufficient specific permittivity and an excellent dielectric characteristic after firing.

To realize firing at a low temperature, for example, the Japanese Unexamined Patent Publication No. 2004-207629 discloses a multilayer electronic device comprising a dielectric ceramic composition including CaZrO₃ based ceramics as its main component and a Si-Li-B based glass phase. According to the article, by setting quantities of Li and B in the Si-Li-B based glass to predetermined ratios, firing at a low temperature becomes possible and evaporation of Li having a property of easily evaporating by being fired can be suppressed. As a result, a Q value is improved. Note that the Q value is an index indicating a loss and is an inverse number of a dielectric loss tanδ, that is, Q = 1/tanδ. However, in this article, while evaporation of Li at firing is suppressed to some extent, Li dissolves as solid in the CaZrO₃ based base material when firing, so that there has been a disadvantage that the high temperature load lifetime deteriorates.

The present invention was made in consideration of this situation and has as its object the provision of a dielectric ceramic composition able to be fired at a low temperature, having an excellent Q value and insulation resistance and, moreover, an improved high temperature accelerated lifetime, and a production method thereof.

The present inventors have committed themselves to study for attaining the above object, found that firing at a low temperature became possible while maintaining a preferable Q value and insulation resistance, and the high temperature accelerated lifetime characteristic could be improved by using a sintering auxiliary including at least an oxide of Li and an oxide of M1 (note that M1 is at least one kind of element selected from group V elements and VI group elements), attaining a structure of dielectric particles composing the dielectric ceramic composition that concentration of the M1 element becomes gradually lower from the particle surface to inside of the particle, and controlling the concentration of the M1 element inside of the dielectric particles to be in a predetermined range; and completed the present invention based on the knowledge.

Namely, according to the present invention, there is provided a dielectric ceramic composition, comprising
a main component including a dielectric oxide, and
a sintering auxiliary comprising a first component including an oxide of Li and a second component including an oxide of M1 (note that M1 is at least one kind of element selected from group V elements and VI group elements): wherein
the dielectric ceramic composition comprises a plurality of dielectric particles and crystal grain boundaries existing between the dielectric particles next to each other;
concentration of M1 element becomes lower from a particle surface to inside thereof in the plurality of dielectric particles; and
when assuming that a particle diameter of the dielectric particles is D and a content ratio of the M1 element at the crystal grain boundaries is 100%, a content ratio of the M1 element at a depth T₅₀, where a depth from the particle surface is 50% of the particle diameter D, is 3 to 55%.

In the dielectric ceramic composition of the present invention, preferably, a content ratio of the M1 element at a depth T₃₀, where a depth from the particle surface is 30% of the particle diameter D, is 5 to 60% with respect to a content ratio of the M1 element being 100% at the crystal grain boundaries.

In the dielectric ceramic composition of the present invention, preferably, a content ratio of the M1 element at a depth T₁₅, where a depth from the particle surface is 15% of the particle diameter D, is 15 to 70% with respect to a content ratio of the M1 element being 100% at the crystal grain boundaries.

In the present invention, the particle diameter D indicates a diameter of each dielectric particle. Therefore, for example, a content ratio of the M1 element at a depth T₅₀ being 50% of the particle diameter D is a content ratio of the M1 element at an approximate center of the dielectric particle.

According to the present invention, there is provided a production method of a dielectric ceramic composition comprising a main component including a dielectric oxide and a sintering auxiliary including a first component including an oxide of Li and a second component including an oxide of M1 (note that M1 is at least one kind of element selected from group V elements and VI group elements), comprising the steps of:
preparing a dielectric ceramic composition material to be the dielectric ceramic composition after being fired, and
firing the prepared dielectric ceramic composition material;
wherein a temperature raising rate at the time of raising the temperature to a holding temperature at firing is 300 to 700°C/hour in the firing step.

In the production method, preferably, a firing holding temperature is 900 to 1100°C in the firing step.

In the production method of the present invention, preferably, temperature holding time is 0 to 0.5 hour in the firing step. Note that when the temperature holding time is 0, the temperature is raised to the firing holding temperature at the temperature raising rate and, then, cooled without holding the temperature at the firing holding temperature.

In the present invention, preferably, the dielectric oxide included as a main component is expressed by a composition formula of {(Ba_{(1-x-y)} Caₓ Sr_{y})O}_{A} (Ti_{(1-z)} Zr_{z})_{B} O₂, and
"A", "B", "x", "y" and "z" in the composition formula satisfy 0.75 ≤ A/B ≤ 1.04, 0 ≤ x ≤ 0.9, 0 ≤ y ≤ 0.5 and 0 < z < 1.

In the present invention, preferably, the sintering auxiliary further comprises
a third component including a compound of M2 (note that M2 is at least one selected from Ba, Ca, Sr, Mg, Mn, B, Al and Zn), and
a fourth component including an oxide of Si and/or a compound to be an oxide of Si when being fired.

An electronic device according to the present invention comprises a dielectric layer formed by the dielectric ceramic composition of the present invention explained above or a dielectric ceramic composition obtained by the production method of the present invention. The electronic device is not particularly limited but multilayer ceramic capacitors, piezoelectric elements, chip inductors, chip varisters, chip thermistors, chip resistors and other surface mounted (SMD) chip type electronic devices may be mentioned.

According to the present invention, a sintering auxiliary including at least an oxide of Li and an oxide of M1 (note that M1 is at least one kind of element selected from group V elements and VI group elements) is used, dielectric particles composing the dielectric ceramic composition are configured that concentration of the M1 element becomes gradually lower from the particle surface to the inside thereof, and the concentration of the M1 element inside of the dielectric particles is controlled to be in a predetermined range. Furthermore, by dissolving the M1 element in solid to inside of the dielectric particles, so that the concentration becomes gradually lower; dispersion or dissolution in solid of a Li element to inside of the dielectric particles at firing can be prevented. Therefore, while maintaining a preferable Q value and insulation resistance, firing at a low temperature becomes possible, the high temperature accelerated lifetime can be improved, and a highly reliable dielectric ceramic composition can be provided.

These and other objects and features of the present invention will become clearer from the following description of the preferred embodiments given with reference to the attached drawings, in which:
FIG. 1 is a sectional view of a multilayer ceramic capacitor according to an embodiment of the present invention;
FIG. 2 is an enlarged sectional view of a key part of a dielectric layer 2 shown in FIG. 1; and
FIG. 3 is a conceptual view for explaining the inner structure of a dielectric particle.

### Multilayer Ceramic Capacitor

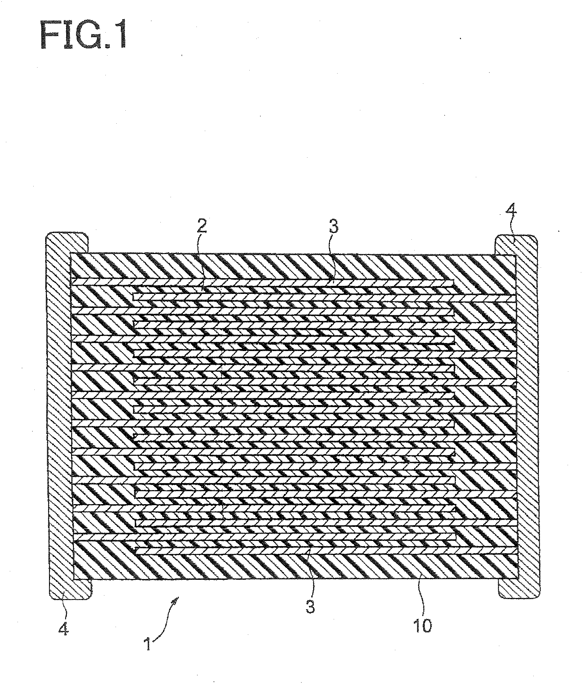

As shown in FIG. 1, the multilayer ceramic capacitor 1 as an electronic device according to an embodiment of the present invention has a capacitor element body 10, wherein dielectric layers 2 and internal electrode layers 3 are alternately stacked. On both end portions of the capacitor element body 10, a pair of external electrodes 4 respectively conducting to the alternately arranged internal electrode layers 3 inside the element body 10 are formed. The internal electrode layers 3 are stacked, so that respective end surfaces thereof are exposed to surfaces of two facing end portions of the capacitor element body 10. The pair of external electrodes 4 are formed on both end portions of the capacitor element body 10 and connected to the exposed surfaces of the alternately arranged internal electrode layers 3 so as to configure a capacitor circuit.

An outer shape and size of the capacitor element body 10 are not particularly limited and may be a suitably determined in accordance with the use object, but is normally a rectangular parallelepiped shape, and the size may be normally a length (0.4 to 5.6mm) × width (0.2 to 5.0mm) × height (0.2 to 1.9mm) or so.

### Dielectric Layer 2

The dielectric layers 2 include a dielectric ceramic composition of the present invention.
The dielectric ceramic composition of the present invention comprises a main component including a dielectric oxide expressed by a composition formula of {(Ba_{(1-x-y)} Caₓ Sr_{y})O}_{A} (Ti_{(1-z)} Zr_{z})_{B} O₂. Here, a quantity of oxygen (O) may be a little deviated from the stoichiometric composition of the above formula.

In the above composition formula, a mole ratio of "A" to "B" (A/B) is not particularly limited, but preferably 0.75 ≤ A/B ≤ 1.04, and more preferably 0.99 ≤ A/B ≤ 1.01. When A/B is 0.75 or larger, forming of semiconductor is prevented when fired in a reducing atmosphere, and when A/B is 1.04 or smaller, a dense sintered body can be obtained even by firing at a low temperature.

In the above composition formula, "x" is not particularly limited, but preferably 0 ≤ x ≤ 0.9, and more preferably 0 ≤ x ≤ 0.8. When "x" is 0.9 or smaller, an effect of sintering at a low temperature is obtained.

In the above composition, "y" is not particularly limited, but preferably 0 ≤ y ≤ 0.5, and more preferably 0 ≤ y ≤ 0.4. When "y" is 0.5 or smaller, effects of improving the reliability, the CR product and the dielectric loss are obtained.

In the above composition, "z" is not particularly limited, but preferably 0 < z < 1, and more preferably 0.01 ≤ z ≤ 0.98. When "z" is smaller than 1, a decline of specific permittivity is prevented. The "z" indicates the number of Zr atoms. By replacing ZrO₂ hard to be reduced comparing with TiO₂, reduction resistance tends to furthermore increase.

In the above composition formula, "x" indicates the number of Ca atoms and "y" indicates the number of Sr atoms. By changing "x", "y" (a Ba/Ca/Sr ratio) and "z" (a Ti/Zr ratio), a phase transition point of crystal can be freely shifted. Therefore, a capacity-temperature coefficient and specific permittivity can be freely controlled.

The dielectric ceramic composition of the present invention comprises, in addition to a dielectric oxide as the main component, a sintering auxiliary including a first component including an oxide of Li and a second component including an oxide of M1 (note that M1 is at least one element selected from group V elements and VI group elements).

The first component (an oxide of Li) acts as a substance for lowering a sintering temperature when combined with the second component including an oxide of M1. A content of the first component with respect to the entire 100 wt% of the sintering auxiliary is preferably 5 to 50 wt%, and more preferably 10 to 30 wt%. When a content of the first component is too small, the effect of lowering the sintering temperature becomes insufficient, while when too much, the high temperature accelerated lifetime tends to deteriorate.

The second component (an oxide of M1) acts as a substance for improving a variety of electric characteristics when dissolved as solid in the dielectric oxide as the base material in addition to giving the effect of lowering the sintering temperature. A content of the second component with respect to the entire 100 wt% of the sintering auxiliary is preferably 0.1 to 15 wt%, and more preferably 1 to 7 wt%. When the content of the second component is too small, the above effect is hard to be obtained, while when too much, the sintering temperature tends to become high.
Note that an oxide of M1 composing the second component is not particularly limited and may be any as far as it is an oxide of at least one kind of element selected from group V elements and VI group elements, but an oxide of W, an oxide of V and an oxide of Mo are preferable.

In addition to the above first component and second component, the sintering auxiliary included in the dielectric ceramic composition of the present invention may further include a third component including a compound of M2 (note that M2 is at least one selected from Ba, Ca, Sr, Mg, Mn, B, Al and Zn) and a fourth component including an oxide of Si and/or a compound to be an oxide of Si when fired.

The third component (an oxide of M2) acts as a substance for improving wettability with the dielectric oxide to be a base material and lowering the sintering temperature when combined with the first component and the second component.

The fourth component (an oxide of Si and/or a compound to be an oxide of Si when fired) acts as a substance for further lowering the sintering temperature.

Note that the above sintering auxiliary may include other component including at least one selected from compounds of Na, K, Rb, Cs, Fr, Y, Gd, Tb, Dy, Sn and P.

A content of the sintering auxiliary is preferably 0.1 to 25 mole%, and more preferably 1 to 15 mole% when assuming that the entire dielectric ceramic composition is 100 mole%. By setting the adding quantity of the sintering auxiliary to the range, firing at a lower temperature can be realized without declining the specific permittivity.

Also, a melting point of the sintering auxiliary is preferably 1200°C or lower, and more preferably 1000°C or lower. When the melting point is 1200°C or lower, firing at a low temperature becomes easy.

### Fine Structure of Dielectric Layer 2

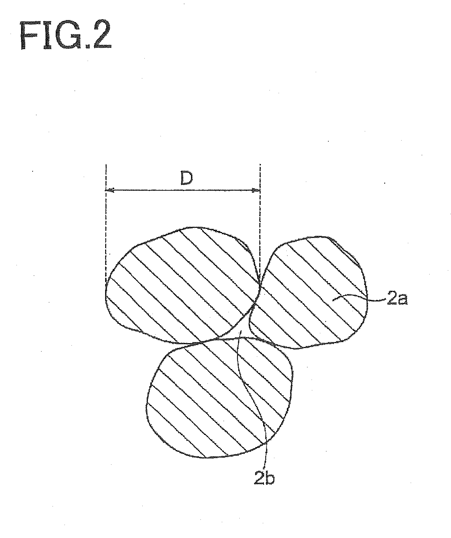

As shown in FIG. 2, the dielectric layer 2 is configured by including dielectric particles (crystal grains) 2a and crystal grain boundaries (grain boundary phase) 2b formed between a plurality of adjacent dielectric particles 2a. The dielectric particles 2a are particles mainly composed of a dielectric oxide expressed by a composition formula of {(Ba_{(1-x-y)} Caₓ Sr_{y})O}_{A} (Ti_{(1-z)} Zr_{z})_{B} O₂ as the main component. In the present embodiment, the dielectric particles 2a include at least M1 other than the dielectric oxide.

In the present embodiment, the M1 element included in the dielectric particles 2a is included in a form that the concentration becomes gradually lower from the particle surface to inside of the particle, and a content ratio of the M1 element at a predetermined depth from the particle surface is controlled to be in a predetermined range. By applying the configuration, dispersion and solid dissolution of a Li element included as the first component to inside the dielectric particles 2a at firing can be effectively prevented. Therefore, deterioration of a high temperature accelerated lifetime, which has been a disadvantage when using a sintering auxiliary including a Li element, can be effectively prevented.

Note that the reason is not clear but it is considered that the M1 element becomes a barrier as a result of being dissolved as solid inside of the dielectric particle 2a, so that the concentration gradually becomes lower; therefore, dispersion of the Li element into the dielectric particle 2a can be prevented.

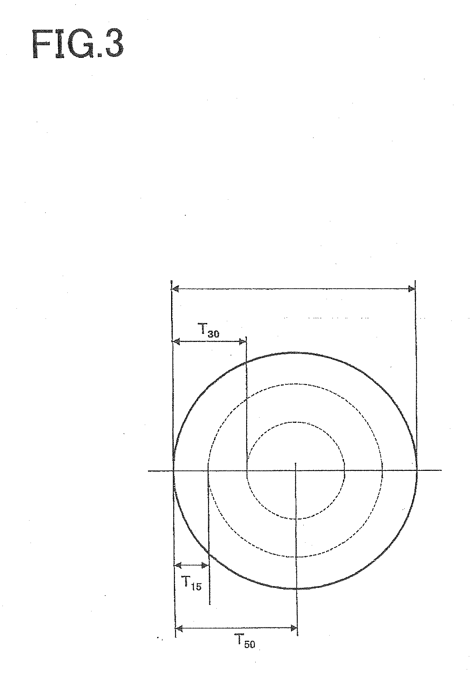

Specifically, when assuming that a content ratio of the M1 element in the crystal grain boundary 2b shown in FIG. 2 is 100%, the content ratio of the M1 element at a depth T₅₀ from the particle surface shown in FIG. 3 is 3 to 55%, preferably 3 to 40%, and more preferably 3 to 30%. Note that the depth T₅₀ means that a depth from the particle surface is 50% of a particle diameter D of the dielectric particle 2a. Namely, a content ratio of the M1 at the depth T₅₀ is a content ratio of the M1 element at the approximate center of the dielectric particle 2a. When the content ratio of the M1 element at the depth T₅₀ is too small or too large, the above effect becomes hard to be obtained and it is liable that the Q value indicating a loss and the high temperature accelerated lifetime characteristic deteriorate.

Note that a particle diameter D of the dielectric particles 2a is a value obtained by measuring an area of a dielectric particle 2a on a section shown in FIG. 2, calculating a diameter by an equivalent circle diameter and multiplying the result with 1.5.

Also, in the present embodiment, in addition to the depth T₅₀, content ratios of the M1 element at depths T₃₀ and T₁₅, which are depths at 30% and 15% of the particle diameter D from the particle surface shown in FIG. 3, are preferably set to be in the predetermined ranges below. Namely, when assuming that a content ratio of the M1 element at the crystal grain boundary 2b is 100%, preferably, T₃₀ is 5 to 60% and T₁₅ is 15 to 70%, more preferably T₃₀ is 5 to 45% and T₁₅ is 15 to 50%, and furthermore preferably T₃₀ is 5 to 30% and T₁₅ is 15 to 40%.

By setting the content ratios of the M1 element at depths T₃₀ and T₁₅ in addition to T₅₀ to the above ranges, the effect of suppressing deterioration of the high temperature accelerated lifetime can be furthermore improved.

Also, a method of measuring content ratios of the M1 element at the respective depths T₅₀, T₃₀ and T₁₅ is not particularly limited, but it can be measured, for example, by a line analysis by a TEM. Namely, first, line analysis is performed by TEM on the dielectric particle 2a by using a straight line from end to end of the particle passing through an approximate center of the dielectric particle 2a. Then, a line analysis is made again on the same particle by shifting the line by 90 degrees, and the results are averaged.

### Internal Electrode Layer 3

A conductive material included in the internal electrode layer 3 is not particularly limited, but since components of the dielectric layer 2 has reduction-resistance, relatively inexpensive base metals may be used. As base metals to be used as the conductive material, Ni or a Ni alloy is preferable. As a Ni alloy, alloys of one or more kinds of elements selected from Mn, Cr, Co and Al with Ni are preferable, and a Ni content in the alloy is preferably 95 wt% or larger. Note that Ni or a Ni alloy may include a variety of trace components, such as P, in an amount of not larger than 0.1 wt% or so. A thickness of the internal electrode layer 3 may be suitably determined in accordance with the use object, etc., but normally it is 0.1 to 3µm, and particularly 0.2 to 2.0µm or so.

### External Electrode 4

A conductive material to be included in the external electrodes 4 is not particularly limited and inexpensive Ni, Cu and alloys of these may be used in the present embodiment. A thickness of the external electrodes may be suitably determined in accordance with the use object, etc. but is normally 10 to 50µm or so.

### Production Method of Multilayer Ceramic Capacitor 1

A multilayer ceramic capacitor 1 of the present embodiment is produced by producing a green chip by a normal printing method or a sheet method using paste, firing the result, printing or transferring external electrodes and firing in the same way as in the multilayer ceramic capacitor in the related arts. Below, the production method will be explained specifically.

First, a dielectric ceramic composition material to be included in dielectric layer paste is prepared and formed to be slurry, so that dielectric layer paste is fabricated.
The dielectric layer paste may be organic based slurry obtained by kneading the dielectric ceramic composition material with an organic vehicle or water based slurry.

As the dielectric ceramic composition material, materials composing the main component, first to fourth component materials composing the sintering auxiliary and other materials to be added in accordance with need are used in accordance with a composition of the dielectric ceramic composition according to the present invention explained above.

As the main component materials, oxides of Ti, Ba, Sr, Ca and Zr and compounds to be oxides of Ti, Ba, Sr, Ca and Zr when fired, etc. may be used.

As materials of the first to fourth components composing the sintering auxiliary, oxides of the above compounds, mixtures of them and composite oxides may be used; alternately, it may be suitably selected from a variety of compounds to be oxides or composite oxides by being fired, for example, carbonate, oxalate, nitrate, hydroxides and organic metal compounds, etc., and mixed for use. A form of adding the materials of respective components for composing the sintering auxiliary is not particularly limited. A sintering auxiliary may be compounded in advance and subjected to thermal treatment for melting to form compound glass compounds, then, pulverized, and the result may be added and mixed in the main component material.

An organic vehicle is obtained by dissolving a binder in an organic solvent. The binder to be used for the organic vehicle is not particularly limited and may be suitably selected from a variety of normal binders, such as ethyl cellulose and polyvinyl butyral. Also, an organic solvent to be used at this time is not particularly limited and may be suitably selected from organic solvents, such as terpineol, butyl carbitol, acetone and toluene, in accordance with a method to be used, such as the printing method and sheet method.

When using water based slurry as the dielectric layer paste, it is sufficient if a water based vehicle obtained by dissolving a water-soluble binder or a dispersant, etc. in water and a dielectric ceramic composition material are kneaded. A water soluble binder to be used for the water based vehicle is not particularly limited and, for example, polyvinyl alcohol, cellulose and water soluble acrylic resin, etc. may be used.

Internal electrode paste is fabricated by kneading a conductive material composed of the above variety of conductive metals and alloys, or a variety of oxides, organic metal compounds and resonates to be the above conductive materials after firing, etc. with the above organic vehicle. Also, external electrode paste is fabricated in the same way as the internal electrode paste.

A content of the organic vehicle in each of the above paste is not particularly limited and may be a normal content of, for example, 1 to 5 wt% or so of a binder and 10 to 50 wt% or so of solvent. Also, each paste may include additives selected from a variety of dispersants, plasticizers, dielectrics and insulators, etc. in accordance with need. A total content thereof is preferably 10 wt% or smaller.

When using a printing method, the dielectric layer paste and the internal electrode paste are stacked by printing on a substrate, such as polyethylene terephthalate, cut into a predetermined shape and, then, removed from the substrate so as to obtain a green chip. On the other hand, when using a sheet method, the dielectric layer paste is used to from a green sheet, the internal electrode paste is printed thereon and, then, the results are stacked to obtain a green chip.

Then, the obtained green chip is subjected to binder removal processing (binder removal step). The binder removal processing condition may be suitably determined in accordance with a kind of a conductive material in the internal electrode layer paste, but when using Ni, a Ni alloy or other base metal as the conductive material, the oxygen partial pressure of the binder removal atmosphere is preferably 10⁻⁴⁵ to 10⁵ Pa. When the oxygen partial pressure is lower than the above range, the binder removal effect declines. While, when the oxygen partial pressure exceeds the above range, the internal electrode layer tends to be oxidized.

Other binder removal condition is a temperature raising rate of preferably 5 to 300°C/hour and more preferably 10 to 100°C/hour, a holding temperature of preferably 180 to 400°C and more preferably 200 to 350°C, and a temperature holding time of preferably 0.5 to 24 hours and more preferably 2 to 20 hours. Also, a firing atmosphere is preferably in the air or a reducing atmosphere and, for example, a wet mixed gas of N₂ and H₂ is preferably used as an atmosphere gas in the reducing atmosphere.

Next, the green chip after the binder removal is fired (firing step). The firing step includes a temperature raising step, temperature holding step and temperature lowering step.

The temperature raising step is a step for raising a temperature of the atmosphere to a firing holding temperature at a predetermined temperature raising rate. The temperature raising rate is 300 to 700°C/hour, preferably 500 to 700°C/hour, and more preferably 600 to 700°C/hour. By making the temperature raising rate relatively high, the M1 element included as the second component in the sintering auxiliary can be effectively dispersed or dissolved as solid in the dielectric particles 2a shown in FIG. 2. As a result, dispersion of the Li element into the dielectric particles 2a at firing can be prevented, and deterioration of the high temperature accelerated lifetime caused by dispersion of the Li element into the dielectric particles 2a can be effectively prevented.

In the temperature raising step, the oxygen partial pressure is adjusted to 10⁻¹⁰ to 10⁻³ Pa in the atmosphere from the beginning or in the middle. In the case of using a base metal as a conductive material of the internal electrode layer, when the oxygen partial pressure of the atmosphere is lower than the above range, the conductive material in the internal electrode layer results in abnormal sintering to be broken in some cases, while when the oxygen partial pressure of the atmosphere exceeds the above range, the internal electrode layer tends to be oxidized. Therefore, the atmosphere is preferably set to be in the above range. Note that as the atmosphere gas, for example, a wet mixed gas of N₂ and H₂ may be preferably used. Namely, a reducing atmosphere is preferable.

In the temperature holding step, the temperature is maintained for a certain time while keeping the atmosphere to be in the above range. The holding temperature at firing is preferably 900 to 1100°C, and more preferably 950 to 1050°C. In the present embodiment, since the sintering auxiliary having the above configuration is included, sintering at a low temperature as above can become possible. As a result that sintering at a low temperature becomes possible, damages on the firing furnace can be prevented, maintenance and management costs and, even energy costs can be effectively suppressed, moreover, disadvantages such as arising of cracks and a decline of specific permittivity can be also prevented. Temperature holding time in the temperature holding step is preferably 0 to 0.5 hour. When the temperature holding time is too long, grain growth becomes too much on the dielectric particles or electrode breaking arises in some cases. Note that when the temperature holding time is 0 hour, the procedure shifts to the temperature lowering step substantially without the temperature holding step. In that case, the holding temperature at firing is synonym of the highest temperature at the temperature raising step.

In the temperature lowering step, the atmosphere may be kept to be in the above range while lowering the temperature, alternately, the atmosphere may be changed in the middle of the temperature lowering step. Namely, the atmosphere may be in the air from the middle of the temperature lowering step. The temperature lowering rate is not particularly limited and may be the same as the rate of the temperature raising rate. Namely, it may be preferably 300 to 700°C/hour, more preferably 500 to 700°C/hour, and furthermore preferably 600 to 700°C/hour. In the present embodiment, the holding temperature at firing is preferably made as low as 900 to 1100°C, so that even when the temperature lowering rate is made relatively high, arising of base material cracks or other structural defects can be suppressed.

Next, the fired capacitor chip (capacitor element body) is subjected to annealing (annealing step). Annealing is processing for re-oxidizing the dielectric layers and, thereby, the IR lifetime can be made remarkably longer, so that the reliability improves.

An oxygen partial pressure in the annealing atmosphere is preferably 1 × 10⁻⁴ Pa or higher, and particularly preferably 1 × 10⁻⁴ to 10 Pa. When the oxygen partial pressure is lower than the above range, re-oxidization of the dielectric layers becomes difficult, while when exceeding the above range, the internal electrode layers tend to be oxidized.

A holding temperature at annealing is preferably 700 to 800°C, and more preferably 750 to 800°C. When the holding temperature at annealing is lower than the above range, oxidization of the dielectric layers becomes insufficient, so that the IR becomes low and the IR lifetime easily becomes short. On the other hand, when the holding temperature exceeds the above range, not only oxidizing the internal electrode layers to lower the capacity, but the internal electrode layers react with the dielectric base material, and deterioration of the capacity-temperature characteristics, a decline of IR and a decline of the IR lifetime are easily caused. Note that annealing may be composed only of a temperature raising step and a temperature lowering step. Namely, the temperature holding time may be zero. In that case, the holding temperature is a synonym of the highest temperature.

Other annealing condition is a temperature holding time of preferably 0 to 20 hours and more preferably 2 to 10 hours, and a cooling rate of preferably 50 to 500°C/hour and more preferably 100 to 300°C/hour. Also, as an atmosphere gas at annealing, for example, a wet N₂ gas, etc. is preferably used.

In the above binder removal step, firing step and annealing step, for example, a wetter, etc. may be used to wet the N₂ gas and mixed gas, etc. In that case, the water temperature is preferably 5 to 75°C.

End surface polishing, for example, by barrel polishing or sand blast is performed on the capacitor fired body obtained as above, and the external electrode paste is printed or transferred and fired to form external electrodes 4. A firing condition of the external electrode paste is preferably, for example, at 600 to 800°C in a wet mixed gas of a nitrogen gas and hydrogen gas for 10 minutes to 1 hour or so. A cover layer (pad layer) is formed by plating, etc. on the surface of the external electrodes 4 if necessary.

A multilayer ceramic capacitor 1 of the present embodiment produced as above is mounted on a print substrate by soldering, etc. and used for a variety of electronic apparatuses.

An embodiment of the present invention was explained above, however, the present invention is not limited to the above embodiment and may be variously modified within the scope of the present invention.
For example, in the above embodiment, a multilayer ceramic capacitor was explained as an example of an electronic device according to the present invention, however, the electronic device according to the present invention is not limited to the multilayer ceramic capacitor and may be any as far as it includes a dielectric layer composed of the dielectric ceramic composition of the present invention.

### EXAMPLES

Below, the present invention will be explained based on furthermore detailed examples, but the present invention is not limited to these examples.

### Example 1

First, a main component material was obtained by compounding respective oxides and carbonate (CaCO₃, SrCO₃, ZrO₂ and TiO₂) so as to obtain a dielectric oxide expressed by the composition formula of {(Ca_{0.70}Sr_{0.30})O - (Zr_{0.97} Ti_{0.03})O₂}.

Next, Li-W-B-Si-O glass as a sintering auxiliary produced in advance was added in an amount of 3 moles with respect to 100 moles of the obtained main component material, wet mixed by a ball mill and dried to obtain a dielectric ceramic composition material. Note that the Li-W-B-Si-O glass as a sintering auxiliary was produced as below. First, oxides of respective components, which are Li₂O, WO₃, B₂O₃ and SiO₂ were compounded so as to obtain a predetermined composition. Next, the result is wet mixed by a ball mill for 16 hours and pulverized, then, dried by evaporating, and a powder after drying was fired at 1000°C in the air for two hours. After that, fine pulverization was performed to obtain a glass compound powder having an average particle diameter of 1 to 2µm or so. Note that, in the present example, a mixing ratio of Li₂O, WO₃, B₂O₃ and SiO₂ was Li₂O in an amount of 11 parts by weight, WO₃ in an amount of 6 parts by weight, B₂O₃ in an amount of 23 parts by weight and SiO₂ in an amount of 60 parts by weight.

Next, the obtained dielectric ceramic composition material in an amount of 100 parts by weight, an acrylic resin in an amount of 4.8 parts by weight, methylene chloride in an amount of 40 parts by weight, ethyl acetate in an amount of 20 parts by weight, mineral spirits in an amount of 6 parts by weight and acetone in an amount of 4 parts by weight were mixed by a ball mill to from paste, and a dielectric layer paste was obtained.

Ni particles having an average particle diameter of 0.1 to 0.8µm in an amount of 100 parts by weight, an organic vehicle (obtained by dissolving ethyl cellulose in an amount of 8 parts by weight in butyl carbitol in an amount of 92 parts by weight) in an amount of 40 parts by weight and butyl carbitol in an amount of 10 parts by weight were kneaded by a triple-roll mill to form paste, so that an internal electrode layer paste was obtained.

Cu particles having an average particle diameter of 0.5µm in an amount of 100 parts by weight, an organic vehicle (obtained by dissolving an ethyl cellulose resin in an amount of 8 parts by weight in butyl carbitol in an amount of 92 parts by weight) in an amount of 35 parts by weight and butyl carbitol in an amount of 7 parts by weight were kneaded to form paste, so that external electrode paste was obtained.

Next, by using the dielectric layer paste fabricated as above was used to from a green sheet having a thickness of 8µm on a PET film, the internal electrode layer paste was printed thereon and, then, the green sheet was removed from the PET film.

Next, the green sheets and protective green sheets (without the internal electrode layer paste printed thereon) were stacked and bonded with pressure, so that a green chip was obtained. The number of stacked sheets having internal electrodes was 100.

Next, the green chip was cut into a predetermined size and subjected to binder removal processing, firing and annealing (thermal treatment), so that a multilayer ceramic fired body was obtained.
The binder removal processing was performed under a condition of a temperature raising rate of 300°C/hour, a holding temperature of 500°C, and a holding time of 2 hours in the air.
Firing was performed under a condition of a temperature raising rate shown in Table 1, a firing holding temperature of 1000°C, holding time of 0.5 hour, the same cooling rate as the temperature raising rate shown in Table 1 and an atmosphere of a wet mixed gas of N₂ + H₂ (oxygen partial pressure was 1 × 10⁻¹⁰ Pa).
Annealing was performed under a condition of a holding temperature of 800°C, a temperature holding time of 2 hours, a cooling rate of 200°C/hour and an atmosphere of wet N₂ gas (oxygen partial pressure was 10⁻¹ Pa). Note that a wetter was used to wet the atmosphere gas at the time of firing and annealing.

Next, after polishing end surfaces of the multilayer ceramic fired body by sand blast, the external electrode paste was transferred to the end surfaces, firing was performed at 800°C for 10 minutes in a wet N₂ + H₂ atmosphere to form external electrodes, so that samples 1 to 10 of a multilayer ceramic capacitor configured as shown in FIG. 1 were obtained. Note that the temperature raising rate at firing was changed in a range of 10 to 800°C in the samples 1 to 10.

A size of each of the capacitor samples obtained as above was 3.2mm × 1.6mm × 0.6mm, the number of dielectric layers sandwiched by internal electrode layers was 100, a thickness thereof was 5µm and a thickness of an internal electrode layer was 1µm.

Next, on each of the obtained capacitor samples, a content ratio of a W element (M1 element) at respective depths T (T₁₅, T₃₀ and T₅₀), a Q value, insulation resistance IR and a high temperature accelerated lifetime (HALT) were measured by methods explained below.

### Content Ratio of W Element (M1 Element) at Depths T (T₁₅, T₃₀ and T₅₀)

After processing dielectric layers of the obtained capacitor samples, the samples were made to be thin pieces by ion-milling. Then, observation was made by using a scanning transmission electron microscope (TEM) and content ratios of W element at depths T (T₁₅, T₃₀ and T₅₀) in dielectric particles were measured.

Specifically, first, a line analysis was made on a straight line from end to end of the particle passing through an approximate center of the dielectric particle by using a TEM at the depths T (T₁₅, T₃₀ and T₅₀) shown in FIG. 3. After that, line analysis was made at the respective depths T on the same particle by shifting the straight line by 90 degrees, and the results were averaged to measure a content ratio of W element at each depth T. In the present example, other than a content ratio of W element inside the dielectric particles, a content ratio of W element on a crystal grain boundary was measured and evaluated by calculating a content ratio of W element at each depth T in percentage when assuming that a content ratio of W element on the crystal grain boundary was 100%. The results are shown in Table 1.

Note that the depths T₁₅, T₃₀ and T₅₀ respectively correspond to depths at 15%, 30% and 50% of a particle diameter D from the particle surface.

### Q Value

First, on each capacitor sample, a dielectric loss (tanδ) was measured under a condition of the room temperature (25°C), a frequency of 1 kHz, and an input signal level (measurement voltage) of 1.0 Vrms by using a digital LCR meter (4274A made by YHP). Then, based on the obtained dielectric loss (tanδ), a Q value (= 1/tanδ) was calculated. The Q value is an index indicating a loss; and the higher the value, the more preferable. In the present example, those exhibited 8000 or higher were considered preferable. The results are shown in Table 1.

### Insulation Resistance IR

The insulation resistance IR was measured on each capacitor sample after applying DC of 50V/µm for 60 seconds at the room temperature (25°C) by using an insulation resistance tester (RB340A made by Advantest Corporation). In the present example, those exhibited 5.0 × 10¹² Ω or higher were considered preferable.

### High Temperature Accelerated Lifetime (HALT)

The high temperature accelerated lifetime (HALT) was evaluated by measuring an average lifetime by keeping the obtained samples in a state of being applied with a direct-current voltage of 10V/µm at 200°C. In the present example, time from the start of application until the insulation resistance drops by a digit was defined as a lifetime. Also, the high temperature accelerated lifetime was measured on 10 capacitor samples. In the present example, 50 hours or longer was considered preferable.

### Table 1

**Table 1**

| Sample No. | | Second Component | Temperature Raising Rate at Firing [°C /hour] | Content T₁₅ [%] | Ratio of W T₃₀ [%] | Element T₅₀ [%] | Q Value | IR [Ω] | HALT [hour] |
|---|---|---|---|---|---|---|---|---|---|
| 1 | Comparative Example | WO₃ | 10 | 94.2 | 92.1 | 90.5 | 5,535 | 2.6 × 10¹¹ | 5 |
| 2 | Comparative Example | WO₃ | 100 | 84.9 | 82.6 | 81.8 | 7,830 | 5.3 × 10¹¹ | 11 |
| 3 | Example | WO₃ | 300 | 65.1 | 57.7 | 53.8 | 8,468 | 6.3 × 10¹² | 59 |
| 4 | Example | WO₃ | 400 | 53.4 | 45.8 | 42.9 | 9,503 | 8.6 × 10¹² | 70 |
| 5 | Example | WO₃ | 500 | 46.7 | 40.4 | 37.9 | 10,350 | 1.3 × 10¹³ | 121 |
| 6 | Example | WO₃ | 550 | 39.7 | 29.7 | 27.1 | 11,003 | 1.5 × 10¹³ | 130 |
| 7 | Example | WO₃ | 600 | 32.7 | 20.3 | 17.6 | 12,369 | 2.1 × 10¹³ | 144 |
| 8 | Example | WO₃ | 650 | 23.3 | 14.5 | 11.7 | 13,629 | 2.0 × 10¹³ | 163 |
| 9 | Example | WO₃ | 700 | 19.9 | 8.2 | 5.3 | 13,548 | 1.9 × 10¹³ | 158 |
| 10 | Comparative Example | WO₃ | 800 | 11.0 | 4.0 | 2.6 | 7,742 | 8.9 × 10¹¹ | 32 |

In Table 1, content ratios of W element at depths T (T₁₅, T₃₀ and T₅₀) are on an assumption that a content ratio of W element on a crystal grain boundary is 100%.

As shown in Table 1, samples 3 to 9, wherein the temperature raising rate at firing was in a range of 300 to 700°C/hour, had the configuration that a content ratio of W element in dielectric particles became lower from the particle surface to inside thereof and, furthermore, contents ratios of W element at depths T₁₅, T₃₀ and T₅₀ were in the predetermined range of the present invention. These samples 3 to 9 exhibited preferable results of an excellent Q value, insulation resistance IR and high temperature accelerated lifetime (HALT). Note that, among them, samples 5 to 9, wherein the temperature raising rates at firing were in a range of 500 to 700°C/hour, exhibited high temperature accelerated lifetimes of exceeding 100 hours, which were particularly preferable results.

On the other hand, in samples 1 and 2, wherein the temperature raising rates at firing were lower than 300°C/hour, content ratios of W element at depths T₁₅, T₃₀ and T₅₀ became out of the range of the present invention and poor results were exhibited in the Q value, insulation resistance IR and high temperature accelerated lifetime (HALT). Note that the reason is considered that Li included in the sintering auxiliary was dispersed or dissolved as solid in the dielectric particles at firing.

Also, in sample 10, wherein the temperature raising rate at firing was 800°C/hour, content ratio of W element at depths T₁₅, T₃₀ and T₅₀ became out of the range of the present invention and poor results were exhibited in the Q value, insulation resistance IR and high temperature accelerated lifetime (HALT). Note that it is considered that the reason is sintering defects.

### Example 2

Other than using Li-V-B-Si-O glass (Li₂O: 11 parts by weight, V₂O₅: 6 parts by weight, B₂O₃: 23 parts by weight and SiO₂: 60 parts by weight) as a sintering auxiliary, capacitor samples were produced in the same way as in the example 1 and evaluated in the same way as in the example 1. Note that a total of 5 kinds of samples were produced in the example 2, wherein the temperature raising rates at firing were rates shown in Table 2 when producing the samples. The results are shown in Table 2.

### Table 2

**Table 2**

| Sample No. | | Second Component | Temperature Raising Rate at Firing [°C /hour] | Content T₁₅ [%] | Ratio of V T₃₀ [%] | Element T₅₀ [%] | Q Value | IR [Ω] | HALT [hour] |
|---|---|---|---|---|---|---|---|---|---|
| 11 | Comparative Example | V₂O₅ | 100 | 83.7 | 82.3 | 80.9 | 5,023 | 1.3 × 10¹¹ | 4 |
| 12 | Example | V₂O₅ | 300 | 65.6 | 57.0 | 52.4 | 8,684 | 4.8 × 10¹² | 63 |
| 13 | Example | V₂O₅ | 500 | 46.6 | 40.2 | 36.4 | 10,596 | 1.2 × 10¹³ | 115 |
| 14 | Example | V₂O₅ | 700 | 18.5 | 7.7 | 5.0 | 14,690 | 1.5 × 10¹³ | 164 |
| 15 | Comparative Example | V₂O₅ | 800 | 10.4 | 3.4 | 2.3 | 6,948 | 4.0 × 10¹¹ | 25 |

In Table 2, content ratios of V element at depths T15, T30 and T50 are on an assumption that a content ratio of V element at a crystal grain boundary is 100%.

From Table 2, it is confirmed that the same results can be obtained also when using an oxide of V instead of an oxide of W as the second component.

### Example 3

Other than using Li-Mo-B-Si-O glass (Li₂O: 11 parts by weight, MoO₃: 6 parts by weight, B₂O₃: 23 parts by weight and SiO₂: 60 parts by weight) as the sintering auxiliary, capacitor samples were produced in the same way as in the example 1 and evaluated in the same way as in the example 1. Note that a total of 5 kinds of samples were produced in the example 3, wherein the temperature raising rates at firing were rates shown in Table 3 when producing the samples. The results are shown in Table 3.

### Table 3

**Table 3**

| Sample No. | | Second Component | Temperature Raising Rate at Firing [°C /hour] | Content Ratio of Mo Element | | | Q Value | IR [Ω] | HALT [hour] |
|---|---|---|---|---|---|---|---|---|---|
| | | | | T₁₅ [%] | T₃₀ [%] | T₅₀ [%] | | | |
| 16 | Comparative Example | MoO₃ | 100 | 84.3 | 83.4 | 82.1 | 4,936 | 2.7 × 10¹¹ | 5 |
| 17 | Example | MoO₃ | 300 | 66.2 | 56.3 | 53.0 | 8,333 | 6.6 × 10¹² | 58 |
| 18 | Example | MoO₃ | 500 | 47.2 | 41.1 | 37.6 | 10,429 | 2.2 × 10¹³ | 127 |
| 19 | Example | MoO₃ | 700 | 19.5 | 8.0 | 5.2 | 13,981 | 2.0 × 10¹³ | 152 |
| 20 | Comparative Example | MoO₃ | 800 | 11.2 | 4.3 | 2.9 | 7,349 | 6.7 × 10¹¹ | 29 |

In Table 3, content ratios of Mo element at depths T15, T30 and T50 are on an assumption that a content ratio of Mo element at a crystal grain boundary is 100%.

From Table 3, it is confirmed that the same results can be obtained also when using an oxide of Mo instead of an oxide of W as the second component.

## Claims

1. A dielectric ceramic composition, comprising
a main component including a dielectric oxide, and
a sintering auxiliary comprising a first component including an oxide of Li and a second component including an oxide of M1 (note that M1 is at least one kind of element selected from group V elements and VI group elements): wherein
said dielectric ceramic composition comprises a plurality of dielectric particles and crystal grain boundaries existing between said dielectric particles next to each other;
concentration of M1 element becomes lower from a particle surface to inside thereof in the plurality of dielectric particles; and
when assuming that a particle diameter of said dielectric particles is D and a content ratio of the M1 element at said crystal grain boundaries is 100%, a content ratio of the M1 element at a depth T₅₀, where a depth from the particle surface is 50% of said particle diameter D, is 3 to 55%.

2. The dielectric ceramic composition as set forth in claim 1, wherein a content ratio of the M1 element at a depth T₃₀, where a depth from the particle surface is 30% of said particle diameter D, is 5 to 60% with respect to a content ratio of the M1 element being 100% at said crystal grain boundaries.

3. The dielectric ceramic composition as set forth in claim 1 or 2, wherein a content ratio of the M1 element at a depth T₁₅, where a depth from the particle surface is 15% of said particle diameter D, is 15 to 70% with respect to a content ratio of the M1 element being 100% at said crystal grain boundaries.

4. The dielectric ceramic composition as set forth in any one of claims 1 to 3, wherein
said dielectric oxide included as a main component is expressed by a composition formula of {(Ba_{(1-x-y)} Caₓ Sr_{y})O}_{A} (Ti_{(1-z)} Zr_{z})_{B} O₂, and
"A", "B", "x", "y" and "z" in said composition formula satisfy 0.75 ≤ A/B ≤ 1.04, 0 ≤ x ≤ 0.9, 0 ≤ y ≤ 0.5 and 0 < z < 1.

5. The dielectric ceramic composition as set forth in any one of claims 1 to 4, wherein
said sintering auxiliary further comprises
a third component including a compound of M2 (note that M2 is at least one selected from Ba, Ca, Sr, Mg, Mn, B, Al and Zn), and
a fourth component including an oxide of Si and/or a compound to be an oxide of Si when being fired.

6. A production method of a dielectric ceramic composition comprising a main component including a dielectric oxide and a sintering auxiliary having a first component including an oxide of Li and a second component including an oxide of M1 (note that M1 is at least one kind of element selected from group V elements and VI group elements), comprising the steps of:
preparing a dielectric ceramic composition material to be said dielectric ceramic composition after being fired, and
firing said prepared dielectric ceramic composition material;
wherein a temperature raising rate at the time of raising the temperature to a holding temperature at firing is 300 to 700°C/hour in said firing step.

7. The production method of the dielectric ceramic composition as set forth in claim 6, wherein a firing holding temperature is 900 to 1100°C in said firing step.

8. The production method of the dielectric ceramic composition as set forth in claim 6 or 7, wherein temperature holding time is 0 to 0.5 hour in said firing step.

9. The production method of the dielectric ceramic composition as set forth in any one of claims 6 to 8, wherein
said dielectric oxide included as a main component is expressed by a composition formula of {(Ba_{(1-x-y)} Caₓ Sr_{y})O}_{A} (Ti_{(1-z)} Zr_{z})_{B} O₂, and
"A", "B", "x", "y" and "z" in said composition formula satisfy 0.75 ≤ A/B ≤ 1.04, 0 ≤ x ≤ 0.9, 0 ≤ y ≤ 0.5 and 0 < z < 1.

10. The production method of the dielectric ceramic composition as set forth in any one of claims 6 to 9, wherein
said sintering auxiliary further comprises
a third component including a compound of M2 (note that M2 is at least one selected from Ba, Ca, Sr, Mg, Mn, B, Al and Zn), and
a fourth component including an oxide of Si and/or a compound to be an oxide of Si when being fired.
